# EUROPEAN PATENT APPLICATION

(11) **EP 4 810 268 A1**
(43) Date of publication of application: **23.09.2026**
(21) Application number: 26162168.4
(22) Date of filing: 04.03.2026
(51) Int. Cl.: B60C 13/00, B29D 30/06

(54) **TIRE AND TIRE MOLDING DIE**

(30) Priority: 19.03.2025 JP 2025044326
(71) Applicant: Toyo Tire Corporation, Itami-shi, Hyogo 664-0847 (JP)
(72) Inventor: SHINOZAKI, Shingo, Hyogo, 664-0847 (JP)
(74) Representative: Müller-Boré & Partner Patentanwälte PartG mbB

(57) **Abstract**

It is possible to provide a tire having favorable moldability, having higher black density than conventional and can achieve enhanced contrast, and having high durability in the pattern region, as well as a tire molding die for molding this tire. A tire 1 includes a pattern region 7 including a plurality of projections 110, each of the plurality of projections 110 includes, in a cross-sectional shape, a base portion 111 that rises up from the reference plane 7a sloping towards an inner side of the projection 110; a tip portion 112 provided more to a tip end than the base portion 111, and rising up from the base portion 111, sloping towards an inner side of the projection 110; in which the angle at which the tip portion 112 rises is greater than an angle at which the base portion 111 rises, based on the reference plane 7a.

## Description

This application is based on and claims the benefit of priority from Japanese Patent Application No. 2025-044326, filed on 19 March 2025, the content of which is incorporated herein by reference.

### BACKGROUND OF THE INVENTION

### Field of the Invention

The present disclosure relates to a tire and a tire molding die.

### Related Art

There is a known tire having, on a part of a sidewall, a pattern region in which a large number of fine projections are aggregated (for example, Japanese Unexamined Patent Application, Publication No. 2020-131904). Such a pattern region, in which incident light is repeatedly reflected between the projections, has a light absorption effect, and consequently, the pattern region is visually recognized to be blacker than the outer surface of the sidewall around the pattern region, whereby the contrast is enhanced. Provision of this type of pattern region contributes to improving the design effect and appearance of the tire.

Patent Document 1: Japanese Unexamined Patent Application, Publication No. 2020-131904

### SUMMARY OF THE INVENTION

With the tire disclosed in Patent Document 1, fine projections are arranged within a lattice portion surrounded by rib-shaped projection portion, and thus the structure is complex, and the difficulty in manufacturing is high. For this reason, there is concern over not being molded into the desired shape, and concern over the appearance becoming worse instead.

In addition, in the case of establishing a form not provided with the rib-shaped projection portion, there is a limitation in the effect of making appear black, and a configuration that makes appear even more black is desired. For example, so long as the height of the fine projections can be further raised, it is considered possible to further enhance the effect of making appear black.

However, if the height of the projections becomes higher, a strength decline of the projection is of concern. There has been concern if the strength of projections declines that part of the projection will deform or go missing, in the case of the tire deforming due to traveling, a case of external force being applied, etc. If a part of the projection deforms or goes missing, there is concern over the external appearance becoming worse instead.

An object of the present disclosure is to provide a tire having favorable moldability, capable of achieving enhanced contrast by the black density being higher than conventional, and having high durability in the pattern area, as well as a tire molding die for molding this tire.

A tire of the present disclosure includes a pattern region provided to at least part of an outer surface of a sidewall in a visually recognizable state as a different site than a surrounding of said part, in which the pattern region includes a plurality of projections that project from a reference plane, each of the plurality of projections includes, in a cross-sectional shape, a base portion that rises up from the reference plane sloping towards an inner side of the projection; a tip portion provided more to a tip end side than the base portion, and rising up from the base portion sloping towards an inner side of the projection; an apex portion provided to a tip end of the tip portion; and a recess portion that indents from the apex portion towards a side of the reference plane at a center of the projection, in which based on the reference plane, an angle at which the tip portion rises is greater than an angle at which the base portion rises.

The tire molding die of the present disclosure is a tire molding die for molding the above-mentioned tire, and includes a projection forming portion including a plurality of recess portions corresponding to the plurality of projections.

According to the present disclosure, it is possible to provide a tire having favorable moldability, capable of achieving enhanced contrast by the black density being higher than conventional, and having high durability in the pattern area, as well as a tire molding die for molding this tire.

### BRIEF DESCRIPTION OF THE DRAWINGS

FIG. 1 is a side view of a tire 1 according to a first embodiment viewing from a direction of a tire rotation axis line X;
FIG. 2 is a view showing an example of a tire molding die for vulcanizing and molding the tire 1 of the first embodiment;
FIG. 3 is a perspective view showing a plurality of projections 110 arranged in a pattern region 7;
FIG. 4 is a view along the arrow T in FIG. 3, which is a plan view showing the plurality of projections 110 arranged in the pattern region 7;
FIG. 5 is a cross-sectional view sectioning the plurality of projections 110 arranged in the pattern region 7 at a position along the arrows A-A in FIG. 4; and
FIG. 6 is a perspective showing a plurality of projections 110B arranged in a pattern region 7 according to a second embodiment; and
FIG. 7 is a cross-sectional view sectioning the plurality of projections 110B arranged in the pattern region 7 according to the second embodiment at the same position as FIG. 5 according to the first embodiment.

### DETAILED DESCRIPTION OF THE INVENTION

Hereinafter, aspects for implementing the present disclosure will be described by referencing the drawings, etc.

### (First Embodiment)

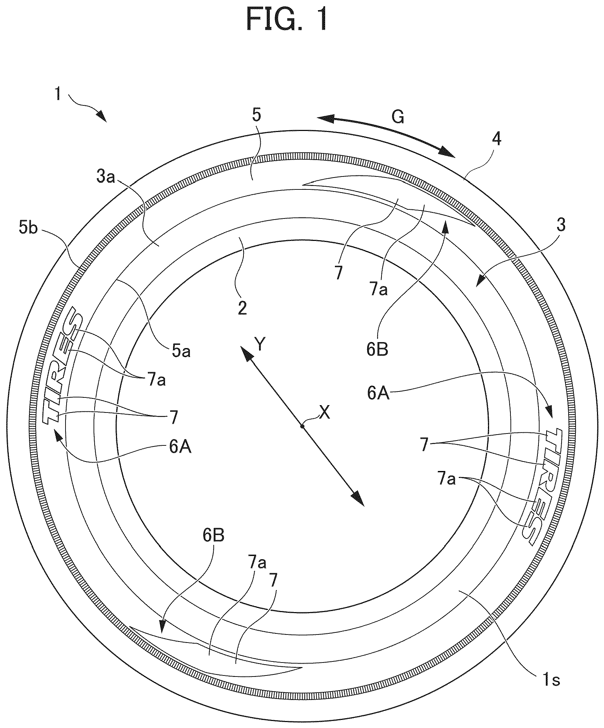

FIG. 1 is a side view of a tire 1 according to a first embodiment when viewing from a direction along the tire rotation axis line X. The tire 1 of the present embodiment is a so-called pneumatic tire in which a predetermined air pressure is filled in the inner cavity thereof. The tire 1 of the embodiment is a pneumatic tire for passenger vehicles including light duty vehicles, SUVs, etc. It should be noted that the configuration of the tire 1 according to the embodiment can also be applied to pneumatic tires for other vehicle types such as light trucks, trucks and buses, for example. In addition, the configuration of the present disclosure is similarly applicable even for non-pneumatic tires.

First, an outline of a configuration mainly related to a lateral surface of the tire 1 will be described by referencing FIG. 1. It should be noted that a tire axial direction, tire circumferential direction and tire radial direction referenced in the following description are as follows. Tire axial direction is the extending direction of a tire rotation axis line X, and is referenced as a paper plane front/back direction in FIG. 1. In addition, since the tire axial direction when viewing from the tire radial direction is the left/right direction, the tire axial direction may be referred to as left/right direction. Tire circumferential direction is a circular arc centered around the tire rotation axis line X, is a direction along the rotation direction of the tire 1, and is indicated by the arrow G in FIG. 1. Tire radial direction is a direction perpendicular to the tire rotation axis line X, and is arbitrarily indicated by the arrow Y in FIG. 1.

As illustrated in FIG. 1, the tire 1 includes beads 2, sidewalls 3 that continue from the beads 2 and extend outward in the tire radial direction away from the tire rotation axis line X, and a tread 4. One bead 2 and one sidewall 3 are provided on one side 1s of tire 1 illustrated in FIG. 1, and one bead 2 and one sidewall 3 are provided on the other side of the tire 1 spaced apart in the tire axial direction from the side 1s and not illustrated in FIG. 1. That is, the tire 1 includes the left and right beads 2 in pairs and the left and right sidewalls 3 in pairs. The tread 4 is disposed between the outer sides in the tire radial direction of the left and right sidewalls 3. The outer peripheral surface of the tread 4 includes a tread surface that contacts with a road surface.

The tire 1 is mainly composed of a plurality of types of rubbers respectively constituting the beads 2, the sidewalls 3, and the tread 4. A carcass ply that constitutes the skeleton of the tire 1 is disposed on an inner cavity-facing side of the rubber constituting the entire tire 1, and an inner liner that maintains an air pressure is disposed on an inner cavity-facing side of the carcass ply. An annular reinforcing belt is embedded in the rubber constituting the tread 4. The carcass ply, the inner liner, and the reinforcing belt are not illustrated. In addition to the foregoing components, various components are included as necessary in consideration of the function of the tire 1.

As illustrated in FIG. 1, the sidewall 3 has an outer surface 3a and an annular decorative region 5 extending on the outer surface 3a over the entire circumference in the tire circumferential direction. The decorative region 5 has a constant width and is defined between an inner arc line 5a and an outer arc line 5b. The inner arc line 5a is located inward in the tire radial direction and close to the tire rotation axis line X in the tire radial direction, and the outer arc line 5b is located outward in the tire radial direction with respect to the inner arc line 5a. Each of the inner arc line 5a and the outer arc line 5b may be a line formed as a concavity, a convexity, or a step on the outer surface 3a of the sidewall 3, or may be a virtual line that does not actually exist.

The tire 1 includes pattern regions 7 on parts of the outer surface 3a of the sidewall 3. Each pattern region 7 is visually recognizable as being different from the perimeter of the part where the pattern region 7 is provided. Each pattern region 7 is provided on a sidewall rubber that is a black rubber member constituting the outer surface of the sidewall 3.

As illustrated in FIG. 1, mark portions 6A are provided on the annular decorative region 5 at two positions opposite to each other across the tire rotation axis line X. Each mark portion 6A includes a plurality of characters arranged in the tire circumferential direction. By means of the plurality of characters, at least one of a manufacturer name, a product name, a brand mark, or the like is displayed. Each character may be bordered with a concave or convex line, or the entirety of each character may be formed of a concavity or convexity. For example, the characters of the mark portions 6A are provided as the pattern regions 7 of the embodiment.

As illustrated in FIG. 1, motif portions 6B are provided on the annular decorative region 5 at two positions each of which is sandwiched between the two mark portions 6A in the circumferential direction. Each motif portion 6B includes a motif like a parallelogram curved along the annular decorative region 5. For example, the motifs of the motif portions 6B are also provided as the pattern regions 7 of the embodiment.

It should be noted that the shapes of the pattern regions 7 are not limited to the foregoing shapes, and various shapes may be adopted, examples of which include an arbitrary shape, shapes delineating the above-mentioned manufacturer name, product name, brand mark, etc., and shapes delineating other numerals, characters, etc.

Each of the above-mentioned respective pattern regions 7 in the first embodiment has a reference plane 7a along a profile of the sidewall 3. On this reference plane 7a, a plurality of projections 110 described later are formed. The pattern region 7, by a plurality of projections 110 being formed therein, is a region provided in a visually recognizable state as a different site than the surroundings of the pattern region 7. It should be noted that the reference plane 7a may overhang from the profile of the sidewall 3 to the outer side in the tire axial direction, may indent from the profile of the sidewall 3 to the inner side in the tire axial direction, or may be a surface at the same position in the tire axial direction as the profile of the sidewall 3.

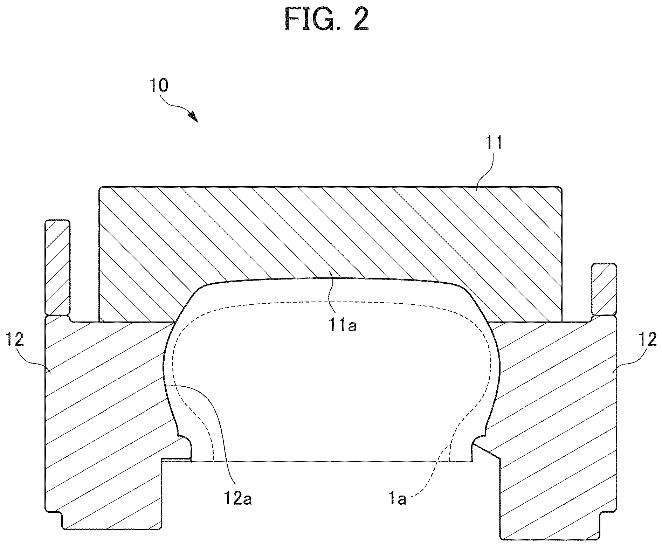

FIG. 2 is a view showing an example of a tire molding die for vulcanizing and molding the tire 1 according to the first embodiment. FIG. 2 is a meridian line cross-sectional view along the axial direction of the tire 1 molded in such a tire molding die 10.

The tire molding die 10 illustrated in FIG. 2 includes a plurality of sectors 11 arranged circumferentially along the outer circumference of the tire 1, a pair of side plates 12 disposed at both axial sides of an annular body formed by the plurality of sectors 11 combined with each other, and a pair of bead rings (not shown). At the time of vulcanization molding, an unvulcanized tire 1a to be molded into the tire 1 is set inside the tire molding die 10, as indicated by the broken line in FIG. 2. The assembly of the sectors 11, the side plates 12, and the bead rings constitutes the mold for molding the tire 1, and the entire outer surface of the tire 1 is molded by the inner surface of the mold, namely, the inner surfaces 11a of the sectors 11, the inner surfaces 12a of the side plates 12, and the inner surfaces of the bead rings. During vulcanization molding, a bladder (not shown) that presses the unvulcanized tire 1a against the inner surface of the tire molding die 10 is disposed inside the unvulcanized tire 1a. The plurality of sectors 11 mainly play a role in forming the tread 4, and the pair of side plates 12 mainly play a role in forming the sidewalls 3. The pair of bead rings play a role in forming the beads 2, and the bladder plays a role in forming the entire inner surface of the tire 1.

An unvulcanized tire 1a is vulcanized whereby the rubber shape of the tire 1 overall is formed by the tire molding die 10, and the plurality of projections 110 described next are formed in the aforementioned pattern region 7. The inner surface 12a of a side plate 12 includes a projection forming portion (not shown) including a plurality of recess portions corresponding to the projections 110.

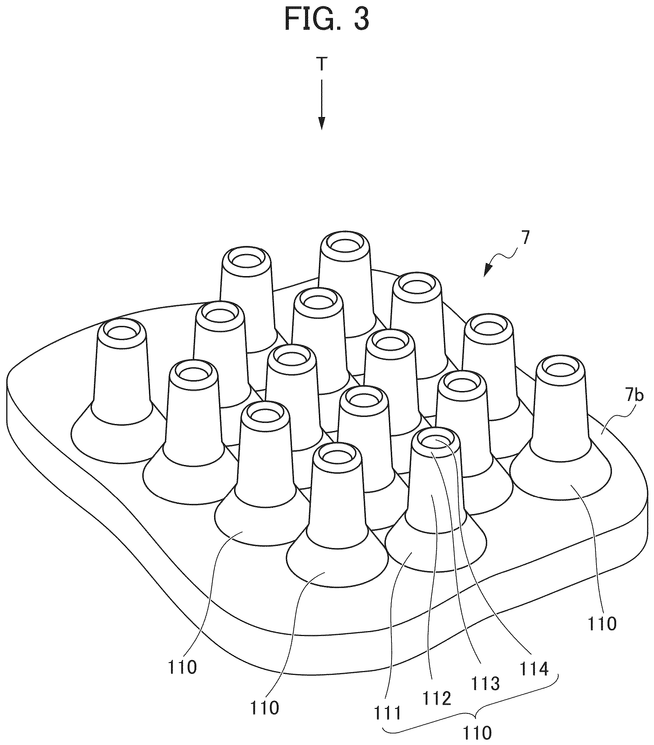

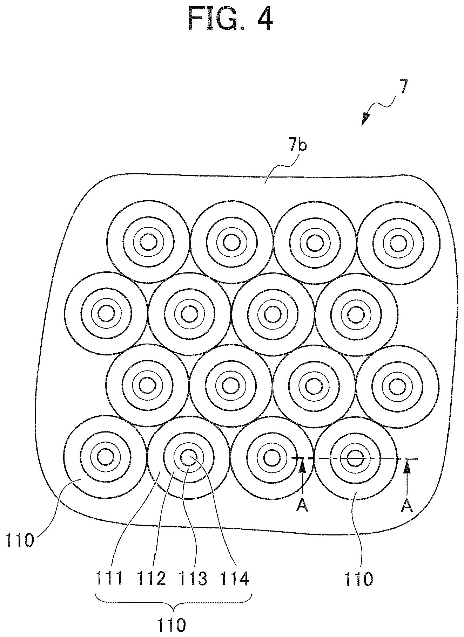

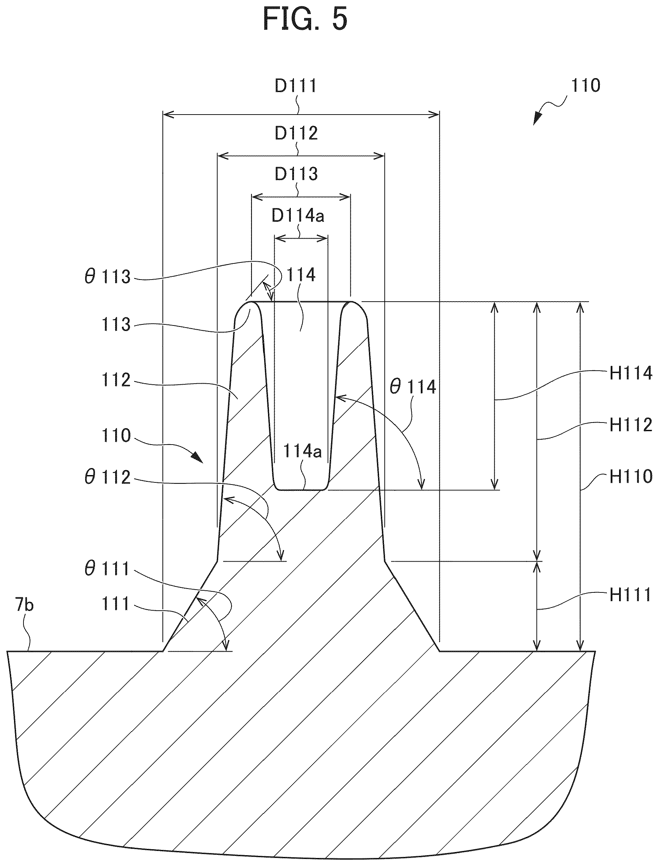

FIG. 3 is a perspective view illustrating the plurality of projections 110 arranged in the pattern region 7. FIG. 4 is a plan view illustrating the plurality of projections 110 arranged in the pattern region 7, as viewed along the arrow T in FIG. 3. FIG. 5 is a cross-sectional view of one of the plurality of projections 110 arranged in the pattern region 7, taken along the line indicated by the arrows A in FIG. 4. While the plurality of projections 110 are arranged in, and project from, the reference plane 7a of the pattern region 7, FIGS. 3 to 5 illustrate a state in which the plurality of projections 110 are arranged on, and project from, a UV unwrapping reference plane 7b that results from UV unwrapping the reference plane 7a of the pattern region 7. FIG. 5 illustrate only one projection 110 in a cross section. The UV unwrapping reference plane 7b is a surface resulting from two-dimensionally unwrapping the three-dimensional outer surface 3a of the sidewall 3.

A plurality of the projections 110, which protrude from the reference plane 7a substantially toward the outer side in the tire axial direction, are arranged. The projections 110 of the present embodiment are arranged regularly in multiple columns, as shown in FIG. 4. Specifically, in one column, the projections 110 are arranged closely at equal intervals (equal pitch), and make a close-packed arrangement in which the relative positions between two adjacent columns are shifted by half pitch. It should be noted that the arrangement of the projections 110 is not limited to a close-packed arrangement and, for example, may be arranged with a predetermined interval therebetween without contacting, or may be a random arrangement in an area that can maintain a predetermined arrangement density. Each projection 110 includes a base portion 111, a tip portion 112, an apex portion 113 and a recess portion 114.

It should be noted that, in the following description, a base side of the projection 110 indicates a side close to a UV development reference plane 7b (or reference plane 7a), and shall indicate the lower side in FIG. 5. In addition, a tip end side of the projection 110 indicates a side far from the UV development reference plane 7b (or reference plane 7a), and shall indicate the upper side in the drawing. In addition, the inner side of the projection 110 indicates the direction towards the inner side of the projection 110 in the plan view shown in FIG. 4, and in a cross section through the center of the projection 110 shown in FIG. 5, is synonymous with a central side of the projection 110, and does not mean within the recess portion 114, the inner surface of the recess portion 114, etc.

The base portion 111 is provided at a position closest to the reference plane 7a on the projection 110, i.e. most to the base side of the projection 110, and forms a part of the outer circumference of the projection 110. The base portion 111 rises up from the reference plane 7a (UV development reference plane 7b) sloping towards the inner side of the projection 110. The base portion 111 of the present embodiment includes a conical outer surface, and the sloped surface on the outer side thereof rises up, sloping towards the inner side of the projection 110 in a cross section passing through the center of the projection 110 (FIG. 5). Herein, in the cross section of FIG. 5, the angle at which the outer surface of the base portion 111 rises, i.e. angle formed by the UV development reference plane 7b (or reference plane 7a) and the outer surface of the base portion 111 shown in FIG. 5, is defined as θ111. The angle θ111 is desirably 50° or more and 80° or less. By the angle θ111 being in the above-mentioned angle range, it is possible to achieve both enhanced strength of the projection 110 and effect of making appear black, and thus the balance between strength and blackness is favorable. In addition, when defining the height from the reference plane 7a (UV development reference plane 7b) until the boundary between the base portion 111 and the tip portion 112 as height H111 of the base portion 111, H111 is desirably 0.1 mm or more and 0.5 mm or less. In addition, when defining the outside diameter of the boundary between the reference plane 7a (UV development reference plane 7b) and the base portion 111 as outside diameter D111 of the base portion 111, the outside diameter D111 is desirably 0.5 mm or more and 1.5 mm or less.

The tip portion 112 is provided more to the tip end side than the base portion 111, and rises up sloping from the tip end side of the base portion 111 towards the inner side of the projection 110. The tip portion 112 of the present embodiment includes a conical outer surface, similarly to the base portion 111, and the sloped surface on the outer side thereof rises up, sloping towards the inner side of the projection 110 in the cross section passing through the center of the projection 110 (FIG. 5). Herein, in the cross section of FIG. 5, the angle at which the outer surface of the tip portion 112 rises, i.e. angle formed by the UV development reference plane 7b (or reference plane 7a) and the outer surface of the tip portion 112 shown in FIG. 5, is defined as θ112. The angle θ112 is desirably 60° or more and 85° or less. In addition, when defining the height from the boundary between the base portion 111 and the tip portion 112 to the tip end of the apex portion 113 described later, i.e. until tip end of the projection 110, as height H112 of the tip portion 112, the height H112 is desirably 0.4 mm or more and 0.9 mm or less. In addition, when defining the outside diameter of the boundary between the base portion 111 and the tip portion 112 as outside diameter D112 of the tip portion 112, the outside diameter D112 is desirably 0.5 mm or more and 1.0 mm or less.

In addition, based on the reference plane 7a (UV development reference plane 7b), the angle θ112 at which the tip portion 112 rises is greater than the angle θ111 at which the base portion 111 rises. In other words, the relationship θ111<θ112 is satisfied. Thereby, the base portion 111 can connect with sufficient surface area to the reference plane 7a with a widening stable shape, and thus it is possible to improve the strength of the projection 110 and enhance durability. In addition, due to the base portion 111 being a widening shape, the rubber can flow into the tire molding die appropriately during molding, and thus the moldability can be made favorable. In addition, the tip portion 112 can constitute the projection 110 of higher height, due to rising at the angle θ112, which is greater than the θ111 at which the base portion 111 rises. With a higher height of the projection 110, since more light can be reflected between the projections 110, it is possible to configure the tire 1 to appear more black. In addition, with a higher height of the projection 110, it becomes configurable with a deeper depth of the recess portion 114 described later, and also in this respect, it is possible to configure the tire 1 to appear more black. Consequently, the pattern region 7 of the tire 1 according to the present embodiment has higher black density than conventional, and thus can achieve enhanced contrast.

The apex portion 113 is provided at the tip end of the tip portion 112, and constitutes the very tip end of the projection 110. In a cross section passing through the center of the projection 110 (FIG. 5), the apex portion 113 rises up at an angle θ113, which is smaller than the angle θ112 at which the tip portion 112 rises up towards the inner side of the projection 110. In the present embodiment, the angle θ113 gradually changes so as to become greater as approaching the tip end side. Therefore, the apex portion 113 is a shape bending into a curved shape in the cross section shown in FIG. 5. Consequently, the apex portion 113 is a shape made by a plurality of different curved surfaces being combined. The shape of the very tip end of the projection 110 is thereby easily molded, and thus manufacture can be facilitated. In addition, since the tip end of the projection 110 properly makes a rounded shape, it is possible to enhance the strength of the projections 110. Furthermore, it is possible to suppress the reflection of light at the apex portion 113, and enhance the effect of making appear black.

The apex portion 113 can also be perceived as a partial shape of the tip portion 112. In addition, due to the apex portion 113 being formed in a curved shape in the cross-sectional shape, there are also cases where the boundary between the apex portion 113 and the tip portion 112 is indistinct; therefore, the height from the boundary between the base portion 111 and the tip portion 112 as mentioned above until the tip end of the apex portion 113 was defined herein as the height H112 of the tip portion 112. In addition, the apex portion 113 smoothly connects to the recess portion 114, by the height gradually decreasing from the position having the highest height towards the recess portion 114 described later. When defining the diameter of the apex portion 113 at a position having the highest height as D113, D113 is desirably 0.3 mm or more and 0.8 mm or less.

The recess portion 114 is a concave shape indented from the apex portion 113 towards the side of the reference plane 7a (UV development reference plane 7b) at the center of the projection 110. The recess portion 114 of the present embodiment includes a flat bottom surface 114a that links from the inner wall of the recess portion 114 at a portion of curved shape, and the cross-sectional shape of the recess portion 114 is configured in a substantially U shape. In the present embodiment, the bottom surface 114a is substantially parallel to the reference plane 7a (UV development reference plane 7b). It should be noted that the bottom surface 114a may be entirely configured in a curved shape. By providing the bottom surface 114a of a flat shape or curved shape, it is possible to easily perform the processing of the tire molding die. In the cross section passing through the center of the projection 110 (FIG. 5), when defining the angle that the wall surface of the inner circumference of the recess portion 114 forms with the bottom surface 114a, i.e. reference plane 7a (UV development reference plane 7b) as θ114, the angle θ114 is desirably 60° or more and 85° or less. In addition, when defining the diameter of the bottom surface 114a as D114a, D114a is desirably 0.2 mm or more and 0.5 mm or less.

In addition, when defining the depth of the recess portion 114 from the tip end of the apex portion 113 as H114, H114 is desirably 0.1 mm or more and 0.8 mm or less. The depth H114 of the recess portion 114 is desirably shallower than the height H112 of the tip portion 112, and the depth H114 of the recess portion 114 in the present embodiment is shallower than the height H112 of the tip portion 112. This is because, when the depth H114 of the recess portion 114 is deeper than the height H112 of the tip portion 112, the strength decline in the projection 110 becomes remarkable. In the present embodiment, since the depth H114 of the recess portion 114 is shallower than the height H112 of the tip portion 112, it is possible to enhance the strength of the projection 110.

Furthermore, the depth H114 of the recess portion 114 is desirably 10% or more and 60% or less of the height of the projection 110. When the depth H114 of the recess portion 114 is less than 10% of the height of the projection 110, the effect of making appear black decreases. In addition, this is because, when the depth H114 of the recess portion 114 exceeds 50% of the height of the projection 110, the strength decline in the projection 110 becomes remarkable. In the present embodiment, since the depth H114 of the recess portion 114 is within the above-mentioned range, it is possible to enhance the strength of the projection 110, while enhancing the effect of making appear black.

In addition, when defining the height from the reference plane 7a (UV development reference plane 7b) of the projection 110 until the tip end of the apex portion 113 as height H110 of the projection 110, H110 is desirably 0.6 mm or more and 1.4 mm or less, and more desirably 1.0 mm or more and 1.3 mm or less. By H110 being in the above-mentioned range, it is possible to achieve enhanced contrast by the black density being higher than conventional, and it is possible to establish a tire having favorable moldability.

According to the tire 1 of the present embodiment as described above, since it is possible to raise the height of the projection 110 while enhancing the strength of the projections 110 provided in the pattern region 7, it is possible to provide a tire 1 having favorable moldability, capable of achieving enhanced contrast by the black density being higher than conventional, and having high durability in the pattern region 7.

### (Second Embodiment)

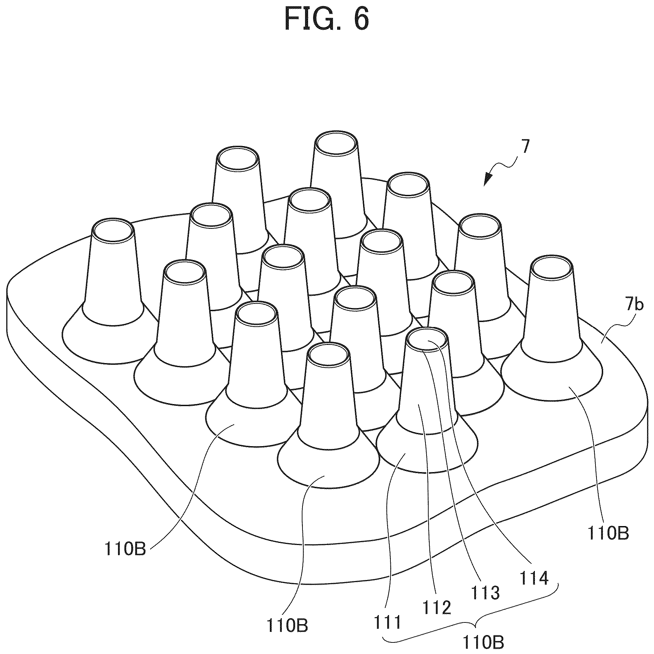

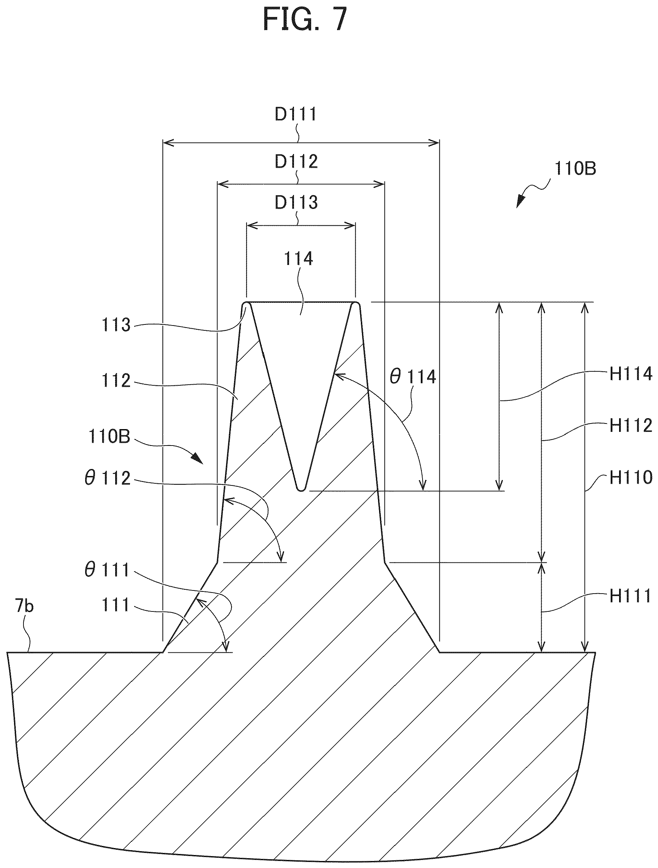

FIG. 6 is a perspective view showing a plurality of projections 110B arranged in a pattern region 7 of the second embodiment. FIG. 7 is a cross-sectional view sectioning the plurality of projections 110B arranged in the pattern region 7 of the second embodiment at the same position as FIG. 5 of the first embodiment. The projections 110B of the second embodiment, other than differing in the specific shapes of the apex portion 113 and the recess portion 114, take the same form as the projections 110 of the first embodiment. Consequently, the same reference numbers are attached to portions performing the same functions as the aforementioned first embodiment, and redundant descriptions will be omitted where appropriate.

The apex portion 113 of the second embodiment is configured in a substantially circular arc shape in a cross section passing through the center of the projection 110B shown in FIG. 7. The radius of curvature of the cross-sectional shape of this apex portion 113 is desirably 0.02 mm or less, and more desirably 0.01 mm or less. This is because, if the radius of curvature of the cross-sectional shape of the apex portion 113 is large, it is expected that the adverse effect tends to arise in that the effect of making appear black declines due to reflected light at the apex portion 113. Therefore, the apex portion 113 of the second embodiment is a substantially pointed shape; however, due to being a substantially circular arc shape having an extremely small radius of curvature in consideration of moldability, both moldability and the effect of making appear black are achieved.

The recess portion 114 of the second embodiment makes a cross-sectional shape that indents in a substantially V-shape from the apex portion 113 towards the reference plane 7a. In other words, the recess portion 114 has a substantially V-shaped cross-sectional shape from the side of the opening of the recess portion 114 towards the reference plane 7a, and makes a concave shape having an inner surface of substantially inverted conical shape.

In addition, in the recess portion 114 of the second embodiment, a bottom surface is not substantially provided thereto. Herein, "bottom surface is not substantially provided thereto" includes a surface recognizable as a very small bottom surface existing, in addition to a form where a surface recognizable as a bottom surface is entirely nonexistent. In other words, as shown in FIG. 7, the valley bottom of the recess portion 114 may slightly include a region configured in a substantially circular arc shape in the cross-sectional shape. In this case, the radius of curvature in the cross-sectional shape of the valley bottom of the recess portion 114 is desirably 0.02 mm or less, and more desirably 0.01 mm or less. This is because, if the radius of curvature of the cross-sectional shape of the valley bottom of the recess portion 114 is large, it is expected that the adverse effect tends to arise in that the effect of making appear black declines due to reflected light at the valley bottom of the recess portion 114 when observing the pattern region 7 from a direction orthogonal the reference plane 7a.

In addition, due to a bottom surface not being substantially provided to the recess portion 114, the angle θ114 of the inner circumferential surface of the recess portion 114 is a smaller angle than the angle θ114 at a similar position in the first embodiment. Dirt is thereby easily removed during cleaning of the tire molding die, and thus it becomes possible for the cleaning work to progress efficiently.

As described above, the projections 110B of the second embodiment have almost no flat surface in either the apex portion 113 or the valley bottom of the recess portion 114. Consequently, even in the case of light from a direction orthogonal to the reference plane 7a being incident on the pattern region 7, and observing the pattern region 7 from the direction orthogonal to the reference plane 7a, it is possible to improve the effect of making appear black. In addition, it is possible to facilitate cleaning of the tire molding die for molding the projections 110B of the second embodiment.

The following effects are exerted by the tire 1 according to the aforementioned embodiments.
(1) A tire 1 according to the present embodiment includes a pattern region 7 provided to at least part of an outer surface 3a of a sidewall 3 in a visually recognizable state as a different site than a surrounding of said part, in which the pattern region 7 includes a plurality of projections 110 that project from a reference plane 7a, each of the plurality of projections 110 includes, in a cross-sectional shape, a base portion 111 that rises up from the reference plane 7a sloping towards an inner side of the projection 110; a tip portion 112 provided more to a tip end side than the base portion 111, and rising up from the base portion 111 sloping towards an inner side of the projection 110; an apex portion 113 provided to a tip end of the tip portion 112; and a recess portion 114 that indents from the apex portion 113 towards a side of the reference plane 7a at a center of the projection 110, in which based on the reference plane 7a, an angle at which the tip portion 112 rises is greater than an angle at which the base portion 111 rises.

It is thereby possible to provide a tire having favorable moldability, having higher black density than conventional, and thus can achieve enhanced contrast, and which has high durability of the pattern region.

(2) In the tire 1 as described in (1), the recess portion 114 includes a bottom surface 114a of flat shape or curved shape.

It is thereby possible to facilitate the processing of tire molding die.

(3) In the tire 1 as described in (1) or (2), the recess portion 114 includes a cross-sectional shape of substantially V shape from a side of an opening of the recess portion 114 towards the reference plane 7a.

It is thereby possible to enhance the effect of making appear black when observing the pattern region 7 from a direction orthogonal to the reference plane 7a. In addition, it is possible to facilitate cleaning of the tire molding die for molding the projections 110B of the second embodiment.

(4) In the tire 1 as described in any one of (1) to (3), the base portion 111 rises from the reference plane 7a at an angle of 50° or more and 80° or less.

It is thereby possible to achieve both enhanced strength of the projections 110 and effect of making appear black, and establish a balance between strength and blackness that is favorable.

(5) In the tire 1 as described in any one of (1) to (4), a depth of the recess portion 114 is shallower than a height of the tip portion 112.

It is thereby possible to enhance the strength of the projections 110.

(6) In the tire 1 as described in any one of (1) to (5), a depth of the recess portion 114 is 10% or more and 60% or less of a height of the projection 110.

It is thereby possible to improve the strength of the projection 110, while enhancing the effect of making appear black.

(7) In the tire 1 as described in any one of (1) to (6), the apex portion 113 rises at a smaller angle than an angle at which the tip portion 112 rises towards an inner side of the projection 110.

The shape of the very tip end of the projection 110 is thereby easily molded, and thus manufacture can be facilitated. Furthermore, it is possible to suppress the reflection of light at the apex portion 113, and enhance the effect of making appear black.

(8) A tire molding die 10 for molding the tire 1 as described in any one of (1) to (7) includes a projection forming portion that includes a plurality of recess portions corresponding to the plurality of the projections 110.

It is thereby possible to provide a tire molding die for molding a tire having favorable moldability, having higher black density than conventional, and thus can achieve enhanced contrast, and having high durability in the pattern region.

### (Modified Embodiments)

Not limiting to the embodiments described above, various modifications and changes are possible, and these are also within the scope of the present disclosure.

(Modified Embodiment 1) Each of the embodiments have been described giving examples in which the base portion 111, tip portion 112 and wall surface of the inner circumference of the recess portion 114 are all conical surfaces. Not limiting to this, for example, at least one of these sloped surfaces may be formed by an angular surfaces such as a quadrilateral pyramid or triangular pyramid.

(Modified Embodiment 2) The first embodiment has been described giving an example in which the apex portion 113 is a shape made by combining a plurality of different curved surfaces. Not limiting thereto, for example, the apex portion 113 of the first embodiment may be established in a shape in which the radius of curvature in a cross section is substantially constant. In addition, the second embodiment has been described giving an example in which the apex portion 113 is a shape in which the radius of curvature in a cross section is substantially constant. Not limiting thereto, for example, the apex portion 113 of the second embodiment may be established in a shape made by combining a plurality of different curved surfaces. Furthermore, in each embodiment, a flat surface may be provided to the apex portion 113.

It should be noted that, although the respective embodiments and modified embodiments can also be employed in combinations where appropriate, detailed descriptions will be omitted. In addition, the present disclosure is not limited by the respective embodiments described above.

## Claims

1. A tire (1) comprising:
a pattern region (7) provided to at least part of an outer surface (3a) of a sidewall (3) in a visually recognizable state as a different site than a surrounding of said part, wherein
the pattern region (7) includes a plurality of projections (110, 110B) that project from a reference plane (7a),
each of the plurality of projections (110, 110B) includes, in a cross-sectional shape,
a base portion (111) that rises up from the reference plane (7a) sloping towards an inner side of the projection (110, 110B);
a tip (112) provided more to a tip end side than the base portion (111), and rising up from the base portion (111) sloping towards an inner side of the projection (110, 110B);
an apex portion (113) provided to a tip end of the tip (112); and
a recess portion (114) that indents from the apex portion (113) towards a side of the reference plane (7a) at a center of the projection (110, 110B),
wherein, based on the reference plane (7a), an angle at which the tip (112) rises is greater than an angle at which the base portion (111) rises.

2. The tire (1) according to claim 1,
wherein the recess portion (114) includes a bottom surface (114a) of flat shape or curved shape.

3. The tire (1) according to claim 1 or 2,
wherein the recess portion (114) includes a cross-sectional shape of substantially V shape from a side of an opening of the recess portion (114) towards the reference plane (7a).

4. The tire (1) according to claim 1 or 2,
wherein the base portion (111) rises from the reference plane (7a) at an angle of 50° or more and 80° or less.

5. The tire (1) according to claim 1 or 2,
wherein a depth of the recess portion (114) is shallower than a height of the tip (112).

6. The tire (1) according to claim 1 or 2,
wherein a depth of the recess portion (114) is 10% or more and 60% or less of a height of the projection (110, 110B).

7. The tire (1) according to claim 1 or 2,
wherein the apex portion (113) rises at a smaller angle than an angle at which the tip (112) rises towards an inner side of the projection (110, 110B).

8. A tire molding die (10) for molding the tire (1) according to claim 1 or 2, the tire molding die (10) comprising a projection forming portion that includes a plurality of recess portions corresponding to the plurality of the projections (110, 110B).
